# DEMANDE DE BREVET EUROPEEN

(11) **EP 2 478 862 A2**
(43) Date de publication de la demande: **25.07.2012**
(21) Numéro de dépôt: 12151918.5
(22) Date de dépôt: 20.01.2012
(51) Int. Cl.: A61C 3/00, A61C 15/02

(54) **Outil antitartre**

(30) Priorité: 21.01.2011 FR 1150506
(71) Demandeur: Perelli, Thierry, 75014 Paris (FR)
(72) Inventeur: Perelli, Thierry, 75014 Paris (FR)
(74) Mandataire: Icosa

(57) **Abrégé**

La présente invention concerne un outil (1) de nettoyage des dents destiné à être placé dans la bouche d'un sujet, **caractérisé en ce qu**'il comprend un support (2) et un crochet (3) comprenant une pointe (4), ledit support (2) et ledit crochet (3) étant associés, par exemple par vissage. L'invention a également pour objet une méthode non thérapeutique de nettoyage des dents ou de maintien de la santé gingivale chez un sujet, ladite méthode comprenant l'utilisation de l'outil (1) selon l'invention. L'invention a encore pour objet une méthode d'aide à l'arrêt du tabac chez un sujet comprenant l'utilisation de l'outil (1) selon l'invention.

## Description

La présente invention concerne le domaine dentaire, plus précisément le domaine du nettoyage des dents. La présente invention concerne un outil de nettoyage de la cavité buccale, préférentiellement des dents. Dans le cadre de la présente invention, on entend par « nettoyage des dents », l'action de retirer de la surface dentaire la plaque dentaire et/ou le tartre ayant pu s'y accumuler, ainsi que l'action de retirer les débris de nourriture potentiellement retenus dans les espaces inter-dentaires.
L'outil selon l'invention est particulièrement utile pour le nettoyage de la face interne des dents. Dans le cadre de la présente invention, on entend par « face interne des dents », la surface des dents qui n'est pas au contact des joues, et se trouve en position interne dans la bouche.

Le tartre dentaire correspond à de la plaque dentaire minéralisée. A plus ou moins long terme, la présence de tartre peut avoir des conséquences néfastes sur la santé des gencives, en favorisant l'apparition de maladies parodontales, telles que des gingivites et des parodontites. En l'absence de traitement adapté, les parodontites peuvent entraîner la perte des dents.
A l'inverse de la plaque dentaire, le tartre ne peut pas être éliminé par un simple brossage à l'aide d'une brosse à dent classique. La réalisation d'un détartrage par un praticien est alors nécessaire.
L'apparition de tartre est variable selon les individus. Outre une hygiène bucco-dentaire insuffisante, favorisant la présence de plaque dentaire puis de tartre, des facteurs de risque existent tels que le pH de la salive par exemple.

Le brossage manuel des dents est généralement assez peu efficace concernant l'élimination de la plaque dentaire sur la face interne des dents, peu accessible à l'aide d'une brosse classique. De plus, la brosse à dent ne permet pas non plus d'éliminer complètement les débris de nourriture qui pourraient se trouver dans les espaces inter-dentaires, et ne seraient pas accessibles par la face externe de la mâchoire. La persistance de ces débris peut être délétère sur la santé dentaire, en participant au développement des bactéries responsables des caries.

Il existe donc un besoin pour un outil, utilisable en parallèle d'une brosse à dents classique, permettant d'empêcher de façon adéquate la formation de plaque dentaire, de retirer les débris de nourritures difficilement accessibles par une brosse à dent classique, et éventuellement d'éliminer le tartre qui pourrait s'être déjà installé sur la face interne des dents.

Dans l'art antérieur, des pointes ont été décrites. De par leur forme rectiligne, ces pointes ne permettent cependant pas d'accéder à la face interne des dents de façon aisée.
Des crochets ont également été décrits, en premier lieu à l'usage de professionnels dentistes. Quelques crochets utilisables pour des particuliers ont cependant été divulgués, ces derniers pouvant être utilisés dans le cadre d'une hygiène bucco-dentaire quotidienne.
Ainsi, le brevet français FR543970 décrit un cure-dent recourbé à l'une de ses extrémités permettant d'atteindre les espaces inter-dentaires par la face intérieure des dents, et non par la face extérieure.
Le brevet américain US4,326,548 et les demandes de brevet US2003/0211443, CN101259040 et US2007/0178419 décrivent des ustensiles dentaires utilisables par un particulier dans le cadre d'une hygiène quotidienne, pour nettoyer par exemple les espaces inter-dentaires ou les appareils orthodontiques des débris de nourriture pouvant y être coincés. Ces quatre brevets ou demandes de brevet décrivent des ustensiles comprenant une tige permettant à l'utilisateur de tenir l'ustensile de la main, et un crochet.
De la même façon, les demandes de brevet GB2197202 et WO00/30559 décrivent des ustensiles permettant de maintenir une hygiène dentaire optimale et de stimuler les gencives, comprenant une tige centrale destinée à être tenue par l'utilisateur, un crochet à l'une des extrémités servant à atteindre les dents par leur face intérieure, et à l'autre extrémité une pointe pour nettoyer les dents sur leur face extérieure.

Cependant, les ustensiles de l'art antérieur cités ci-dessus doivent être tenus en main par l'utilisateur, ce qui limite la liberté de mouvement de l'utilisateur, et en conséquence limite la durée d'utilisation de ces outils. Il existe donc un besoin pour un outil d'hygiène dentaire permettant de nettoyer la face interne des dents et les espaces inter-dentaires de façon autonome, c'est-à-dire sans limiter la capacité de l'utilisateur à exercer une autre activité, nécessitant par exemple l'utilisation de ses mains.
L'outil selon l'invention est ainsi destiné à rester dans la bouche de l'utilisateur pendant une durée allongée par rapport aux ustensiles de l'art antérieur. En sus de son action sur l'hygiène bucco-dentaire, l'utilisation de l'outil selon l'invention aura un effet relaxant et /ou déstressant sur l'utilisateur.

D'autre part, les ustensiles de l'art antérieur, et notamment les pointes et les crochets, sont habituellement en métal. Il découle de cette composition un risque de blessure des tissus buccaux, et de rayure de l'émail.
L'outil selon l'invention présente donc l'avantage de n'être préférentiellement pas formé de métal, ni d'un matériau plus dur que l'émail, pouvant occasionner des rayures à la surface des dents.

Enfin, les ustensiles de l'art antérieur présentent généralement un crochet en forme d'hameçon (forme arrondie). Il existe alors un risque de coincer la pointe du crochet entre les dents.
A l'inverse, l'outil selon l'invention présente l'avantage d'avoir une forme rectangulaire avec des angles droits ou arrondis, et une pointe très fine, ce qui évite ce risque de blocage de la pointe du crochet dans les espaces inter-dentaires.

Ainsi, la présente invention permet un nettoyage optimum de la face interne des dents et des espaces inter-dentaires. La présente invention présente également l'avantage de limiter la formation de tartre sur la face interne des dents et des espaces inter-dentaires.

### RÉSUMÉ

La présente invention concerne un outil de nettoyage des dents destiné à être placé dans la bouche d'un sujet, **caractérisé en ce qu**'il comprend un support exobuccal et un crochet endobuccal comprenant une pointe à l'une de ses extrémités. Le support est **caractérisé en ce qu**'il contient une partie présentant une surface destinée à être au contact des lèvres du sujet utilisant l'outil, empêchant ainsi la pénétration de ladite partie dans la bouche. L'extrémité du crochet opposée à la pointe est fixée sur la partie du support destinée à être au contact du sujet par tout moyen de fixation approprié, par exemple, mais non limitativement, par vissage. Le support comprend également une partie opposée au crochet permettant la préhension de l'outil par ledit sujet. Le support de l'outil de la présente invention est également **caractérisé en ce qu**'il comprend un trou taraudé permettant de visser le crochet au support. Le crochet de la présente invention est **caractérisé en ce qu**'il comprend une partie rectiligne comprenant un filetage permettant de visser le crochet au support. Le crochet est également **caractérisé en ce qu**'il comprend une ou plusieurs angulations formant une courbure ainsi qu'une partie rectiligne en retour de la courbure, ladite partie rectiligne en retour étant de préférence parallèle à la partie permettant la préhension du support. L'outil de la présente invention est de plus **caractérisé en ce qu**'il comprend en outre un capuchon.

La présente invention concerne par ailleurs une méthode non thérapeutique de nettoyage des dents ou de maintien de la santé gingivale chez un sujet, ladite méthode comprenant l'utilisation de l'outil objet de la présente invention. De plus, la présente invention concerne également une méthode d'aide à l'arrêt du tabac chez un sujet comprenant l'utilisation de l'outil décrit dans la présente invention.

### DESCRIPTION SUCCINCTE DES FIGURES

La figure 1 représente une vue en perspective de l'outil de l'invention, en pièces détachées, avec son capuchon.
La figure 2 représente une vue isométrique de l'outil de l'invention.
La figure 3 représente une vue en coupe de l'outil de l'invention, avec son capuchon.
La figure 4 représente une vue de face de l'outil de l'invention.
La figure 5 représente une vue de dessus de l'outil de l'invention.
La figure 6 représente une vue en coupe de l'outil de l'invention.
La figure 7 représente des vues en coupe de différents modes de réalisation du crochet de l'outil de l'invention.
La figure 8 représente une vue en coupe de l'outil de l'invention, en position dans la cavité buccale de l'utilisateur.

### DESCRIPTION DÉTAILLÉE

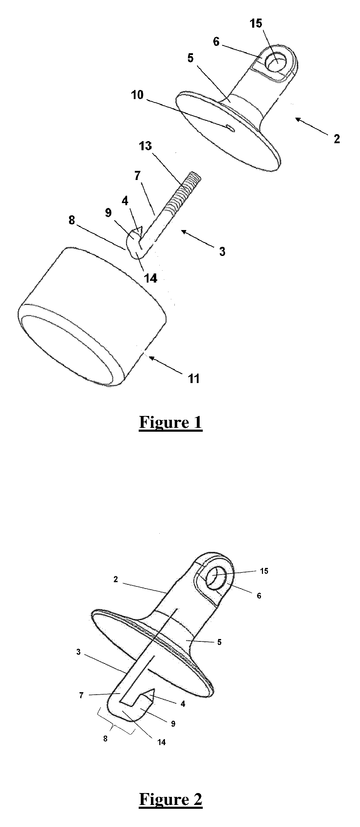

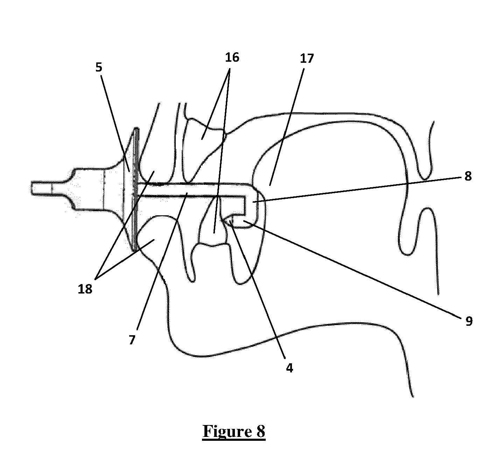

Selon l'invention, l'outil **1** de l'invention, représenté sur la figure 1, est composé d'un support **2** et d'un crochet **3** fixé, par exemple par vissage, au support **2** à l'une de ses extrémités et l'autre extrémité, libre, comprend une angulation **8** et une pointe **4.** Selon un mode de réalisation de l'invention, l'outil **1** comprend en outre un capuchon **11.**
Selon un mode de réalisation, le support **2** est exobuccal ; il reste à l'extérieur de la bouche du sujet lorsque l'outil **1** est utilisé par ledit sujet. Selon un mode de réalisation, le crochet **3** est endobuccal ; il est situé à l'intérieur de la bouche du sujet lorsque l'outil **1** est utilisé par ledit sujet.
Selon un mode de réalisation de l'invention, l'outil **1** est maintenu dans une bonne position d'utilisation (c'est-à-dire avec le support **2** en position exobuccale et le crochet **3** en position endobuccale) par l'action des dents **16** et/ou de la langue **17** et/ou des lèvres **18** sur le crochet **3,** préférentiellement sur la partie rectiligne **7** du crochet **3** la plus proche du support **2** ou au contact du support **2** (figure 8).
Selon un mode de réalisation de l'invention, le sujet utilisant l'outil **1** selon l'invention utilise spécifiquement la pointe **4** du crochet **3** pour gratter la face interne de ses dents pour la nettoyer.
Selon un mode de réalisation de l'invention, le sujet déplace la pointe **4** sur les endroits à nettoyer en effectuant des mouvements de sa bouche, de préférence par des mouvements de sa langue **17,** de ses lèvres **18** et/ou de ses dents **16.**
Selon un mode de réalisation de l'invention, l'outil **1** selon l'invention n'a pas l'apparence d'un stylo.
Selon un mode de réalisation de l'invention, l'outil **1** selon l'invention à l'apparence d'une sucette, de préférence d'une sucette/tétine, du type des sucettes à destination des enfants.
Selon un mode de réalisation de l'invention, l'outil **1** a une masse variant de 2,5 à 4,5 grammes, de préférence de 3 à 4 grammes, plus préférentiellement a une masse d'environ 3,5 grammes.
Dans le sens de la présente invention, le terme « environ », placé devant une valeur numérique, signifie 10% en plus ou en moins de cette valeur numérique.

### Support

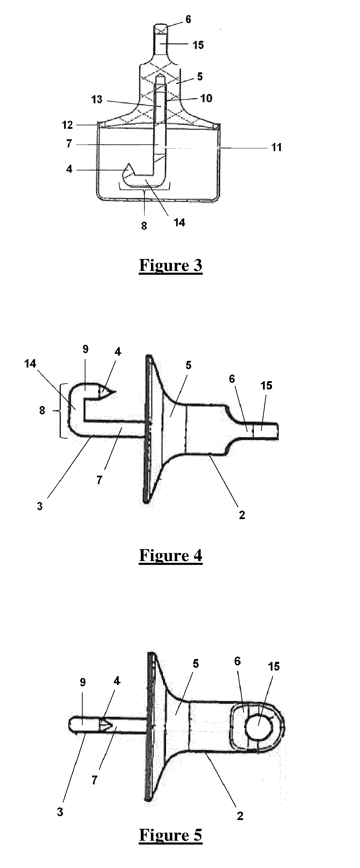

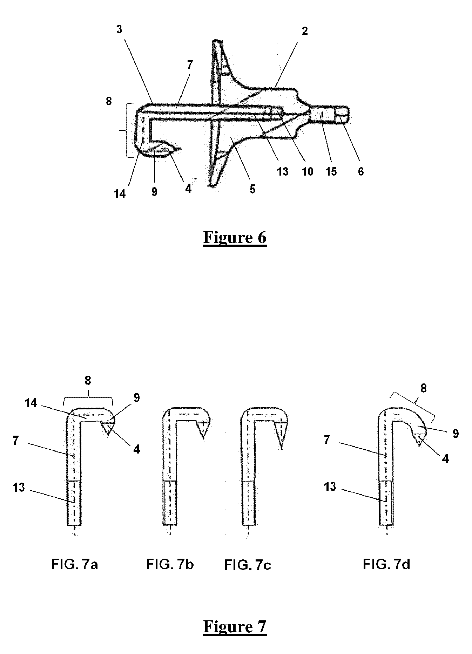

Selon un mode de réalisation, le support n'a pas la forme d'une tige.
Selon un mode de réalisation de l'invention, le support **2,** représenté sur la figure 1, possède une partie **5** destinée à être au contact des lèvres **18** du sujet utilisant l'outil **1** et une partie **6,** opposée au crochet **3,** permettant la préhension de l'outil **1** par le sujet au moment de sa mise en place dans la bouche.
Les matériaux susceptibles d'être utilisés pour la réalisation du support **2** sont bien connus de l'Homme du métier. Des exemples de tels matériaux sont du plastique, du latex ou du caoutchouc, de la résine thermoplastique, du silicone, du polyuréthane, du téflon.
Selon un mode de réalisation de l'invention, le support **2** a une masse variant de 2,0 à 4,4 grammes, de préférence de 2,6 à 3,8 grammes, plus préférentiellement a une masse d'environ 3,2 grammes.
Dans un mode de réalisation, le support **2** de l'outil **1** selon l'invention comprend une partie **5** de forme du type forme de la partie exobuccale d'une sucette/tétine. Préférentiellement, la partie **5** du support **2** est du type forme d'écran labial de sucette/tétine. Préférentiellement, la partie **5** a une forme évasée.
Selon un mode de réalisation, la partie **5** du support **2** de l'outil **1** selon la présente invention présente une surface suffisamment importante, prenant appui sur les lèvres **18,** pour empêcher sa pénétration dans la bouche. La surface de cette partie **5,** destinée à être au contact des lèvres, est préférentiellement supérieure à 2 cm², plus préférentiellement supérieure à 4 cm², et encore plus préférentiellement supérieure à 6 cm²_{.}
Selon un mode de réalisation de l'invention, le support **2** a une longueur totale, de l'extrémité de la partie **5** jusqu'à l'extrémité de la partie **6,** supérieure à 1 cm, préférentiellement supérieure à 2 cm, plus préférentiellement entre 2 et 3 cm, de préférence d'environ 2,7 cm. Selon un mode de réalisation de l'invention, la partie **5** du support **2** a une hauteur variant de 1,5 à 2,5 cm, préférentiellement d'environ 2 cm. Selon un mode de réalisation de l'invention, la partie **6** du support **2** a une longueur variant de 0,5 à 4 cm, de préférence d'environ 0,7 cm.
Selon un mode de réalisation de l'invention, la partie **5** du support **2** a dans sa partie la plus large un diamètre préférentiellement supérieur à 1 cm, plus préférentiellement supérieur à 2 cm, encore plus préférentiellement égal à environ 3 cm. Selon un mode de réalisation de l'invention, la partie **5** a un diamètre inférieur à 2 cm dans sa partie la plus étroite, préférentiellement un diamètre de 1 cm. Selon un mode de réalisation de l'invention, la partie **6** de l'invention a une épaisseur supérieure à 1 mm, préférentiellement supérieure à 2 mm, plus préférentiellement supérieure à 3 mm, encore plus préférentiellement égale à environ 3,3 mm.
Selon un mode de réalisation de l'invention, le support **2** présente un trou **15,** de diamètre compris entre 1 et 15 mm, préférentiellement entre 3 et 10 mm, plus préférentiellement entre 4 et 6 mm, plus préférentiellement d'environ 5 mm, dans la partie **6,** destiné par exemple au passage d'un cordon ou d'un anneau. Dans un mode de réalisation de l'invention, la partie **6** de l'outil est un anneau.
Selon un mode de réalisation de l'invention, la partie **5** du support **2** comprend un moyen **10** pour fixer le crochet **3** sur le support. Un exemple de moyen **10** est un trou, de préférence un trou taraudé (représenté sur les figures 3 et 6). Selon un mode de réalisation de l'invention, le trou taraudé **10** a un diamètre compris entre 1 et 5 mm, préférentiellement entre 2 et 4 mm, plus préférentiellement d'environ 3 mm, un pas d'environ 0,5 mm et une profondeur d'environ 1,4 cm. Selon un mode de réalisation de l'invention, le trou **10** n'est pas débouchant. Selon un mode de réalisation de l'invention, le moyen **10** pour fixer le crochet **3** sur le support **2** est situé à l'intérieur de la partie **5** du support **2,** de préférence au centre comme représenté sur la figure 1.
Selon un mode de réalisation de l'invention, le support **2** ne comprend pas de moyen **10** pour fixer le crochet **3.** Dans ce mode de réalisation, le crochet **3** et le support **2** ne forment qu'une seule et même pièce. Dans ce mode de réalisation, la pièce **1,** comprenant le crochet **3** et le support **2,** est moulée en un bloc. Selon un mode de réalisation de l'invention, le support **2** est moulé autour de l'extrémité du crochet **3** ne comprenant pas la pointe **4,** cette extrémité pouvant être filetée préalablement au moulage.
Dans un mode de réalisation de l'invention, le crochet **3** est emmanché en force dans le support **2.**
Dans un mode de réalisation de l'invention, l'assemblage du crochet **3** sur le support **2** peut s'effectuer à l'aide d'un matériau fixateur, tel une colle.
Selon un mode de réalisation de l'invention, le support **2** n'est pas un écrou.

### Crochet

Selon un mode de réalisation de l'invention, le crochet **3** de l'outil **1** selon l'invention, représenté sur la figure 4, est composé (de l'extrémité associée au support à la pointe) d'une partie rectiligne **7,** d'une ou plusieurs angulations, formant une courbure **8,** d'un retour de la tige **9,** de préférence ledit retour **9** est rectiligne et parallèle à la tige **7,** et d'une pointe **4,** destinée à nettoyer les dents. Dans un mode de réalisation, sur sa partie rectiligne **7,** le crochet **3** porte un moyen **13** (figure 1) permettant de fixer le crochet **3** sur la partie **5** du support **2,** pour former l'outil **1** selon l'invention. Selon un autre mode de réalisation, le crochet ne porte pas de moyen **13.**
Selon un mode de réalisation de l'invention, la tige rectiligne **7,** la courbure **8,** la pointe **4** et le moyen **13** sont réalisées dans le même matériau. Selon un mode de réalisation de l'invention, le crochet **3** est moulé d'un bloc.
Les matériaux susceptibles d'être utilisés pour la réalisation du crochet **3** sont bien connus de l'Homme du métier. Des exemples de tels matériaux sont diverses matières plastiques flexibles (nylon par exemple), des résines synthétiques, des alliages métalliques inoxydables. De préférence, le crochet **3** n'est pas en métal, ni en un matériau plus dur que l'émail.
Selon un mode de réalisation de l'invention, le crochet **3** a une masse variant de 0,1 à 0,5 grammes, de préférence de 0,2 à 0,4 grammes, plus préférentiellement a une masse d'environ 0,3 grammes.
Selon un mode de réalisation de l'invention, le crochet **3** (à l'exception de la pointe **4**) a un diamètre compris entre 1 mm et 5 mm, préférentiellement entre 2 mm et 4 mm, plus préférentiellement d'environ 3 mm et une longueur totale comprise entre 2 cm et 6 cm, préférentiellement entre 3 cm et 5 cm, plus préférentiellement d'environ 4 cm.
Selon un mode de réalisation de l'invention, la courbure **8** de la tige est obtenue par deux angles successifs de 60° à 120°, préférentiellement d'environ 90° chacun, les deux angles étant séparés par une partie rectiligne **14** de 0,3 à 1,3 cm, préférentiellement d'environ 0,8 cm (figures 7a à 7c).
Selon un autre mode de réalisation de l'invention, la courbure **8** de la tige est obtenue par un angle unique de 60° à 120°, de préférence d'environ 90°. A la suite de l'angle, la tige forme un arc de cercle, sur 1/6 à 1/3 d'arc de cercle, de préférence sur environ un quart d'arc de cercle, ledit arc de cercle ayant un rayon de courbure de 0,2 à 0,6 cm, de préférence d'environ 0,4 cm (figure 7d).
Selon un mode de réalisation de l'invention, la pointe **4** a un diamètre de base égal à celui du crochet **3** et est de taille variable, de sorte que la pointe **4** est plus ou moins effilée (figure 7).
Selon un mode de réalisation, la pointe **4** a une longueur variant entre 3 et 7 mm (figure 7a, 7b, 7c).
Le moyen **13** situé sur la partie rectiligne **7** du crochet **3** est compatible avec le moyen **10** situé sur le support, et permet de fixer le crochet **3** sur le support **2.** Un exemple de tel moyen **13** est un filetage.
Selon un mode de réalisation de l'invention, le filetage **13** a une longueur comprise entre 0,5 et 1,5 cm, de préférence d'environ 1 cm et un pas entre 0,25 et 1 mm, de préférence d'environ 0,5 mm.
Selon un mode de réalisation de l'invention, le crochet **3** peut être vissé à une profondeur variable à l'intérieur du support **2,** de sorte que la longueur du crochet **3** placée dans la bouche du sujet varie, et peut être adaptée à la morphologie de la mâchoire du sujet.
Selon un mode de réalisation de l'invention, l'axe du crochet forme un angle compris entre 70 et 110° avec la normale de la surface de la partie (5) du support (2) auquel il est fixé. Préférablement, cet angle est compris entre 80° et 100°, encore plus préférablement d'environ 90°.

### Capuchon

Selon un mode de réalisation de l'invention, l'outil **1** selon l'invention comprend en outre un capuchon **11.** Ledit capuchon **11** est adaptable, par exemple emboitable, sur le support **2** (figure 3).
Selon un mode de réalisation de l'invention, le capuchon **11** est destiné à protéger le crochet **3,** pour éviter par exemple sa dégradation ou des blessures occasionnées par sa partie pointue **4.**
Selon un mode de réalisation, le capuchon **11** est transparent.
Les matériaux susceptibles d'être utilisés pour la réalisation du capuchon **11** sont bien connus de l'Homme du métier. Des exemples de tels matériaux sont des matières plastiques.
Selon un mode de réalisation, le capuchon **11** a des dimensions lui permettant à la fois de s'adapter sur le support **2** et d'englober le crochet **3.** Le capuchon **11** doit ainsi s'adapter à la longueur du crochet **3** et au diamètre du support **2.**
Selon un mode de réalisation, le capuchon **11** est de forme cylindrique ou conique, de préférence cylindrique. Selon un mode de réalisation de l'invention, le capuchon **11** a la forme d'un cylindre de diamètre supérieur à deux fois la largeur totale du crochet **3.** Selon un mode de réalisation de l'invention, le diamètre du capuchon **11** varie de 0,6 à 3,1 cm et sa hauteur varie de 1,7 à 2,5 cm, de préférence d'environ 2 cm.
Selon un mode de réalisation de l'invention, le support **2** vient s'emboîter sur le capuchon **11** grâce à une nervure **12** ménagée dans la paroi du capuchon **11** (figure 3).
Selon un mode de réalisation, le capuchon **11** peut également servir de contenant. Selon ce mode de réalisation, ledit capuchon contient une substance destinée à recouvrir le crochet **3.** Selon un mode de réalisation, ladite substance est sélectionnée dans le groupe comprenant les agents antiseptiques, tels que, par exemple la chlorhexidine, les agents anti-inflammatoires, les agents fluorés, tels que, par exemple des fluorures d'amine ou les agents permettant de lutter contre la mauvaise haleine, tels que, par exemple le dioxyde de chlore ou le chlorite de sodium.

### Méthode non thérapeutique de nettoyage des dents

La présente invention concerne également une méthode de nettoyage des dents d'un sujet, préférentiellement de la face interne des dents, comprenant l'utilisation de l'outil **1** tel que décrit ci-dessus.
Selon un mode de réalisation de l'invention, l'outil **1** selon l'invention est utile pour nettoyer les dents d'un sujet, préférentiellement la face interne des dents. Selon un mode de réalisation de l'invention, l'outil **1** selon l'invention est utile pour maintenir propre le tissu minéralisé des dents.
Selon un mode de réalisation, l'outil **1** selon l'invention est utile pour prévenir l'altération du tissu minéralisé des dents, en évitant l'apparition de plaque dentaire et/ou de tartre à la surface des dents.

La présente invention concerne également une méthode pour retirer la plaque dentaire d'un sujet, préférentiellement la plaque dentaire située sur la face interne des dents, et les débris de nourriture des dents d'un sujet et des espaces inter-dentaires, préférentiellement les débris accessibles uniquement par la face interne des dents ou par l'intérieur de la mâchoire, ladite méthode comprenant l'utilisation de l'outil **1** tel que décrit ci-dessus.
Selon un mode de réalisation de l'invention, l'outil **1** de la présente invention est utile pour retirer la plaque dentaire d'un sujet, préférentiellement la plaque dentaire située sur la face interne des dents, et les débris de nourriture des dents et de la face interne des dents d'un sujet, préférentiellement les débris accessibles uniquement par la face interne des dents ou par l'intérieur de la mâchoire.

La présente invention concerne également une méthode pour retirer tout ou partie du tartre installé sur les dents d'un sujet, préférentiellement sur la face interne des dents, ladite méthode comprenant l'utilisation de l'outil **1** tel que décrit ci-dessus.
Selon un mode de réalisation de l'invention, l'outil **1** de la présente invention est utile pour retirer tout ou partie du tartre installé sur les dents d'un sujet, préférentiellement sur la face interne des dents.

Avantageusement, l'outil **1** selon l'invention est utilisé préalablement au brossage des dents.

La présente invention concerne également une méthode pour maintenir la bonne santé des gencives chez un sujet, par exemple en évitant le développement de maladies parodontales telles que les gingivites ou les parodontites, ladite méthode comprenant l'utilisation de l'outil **1** tel que décrit ci-dessus.

La présente invention concerne également une méthode de soin de la gencive.
La présente invention concerne également une méthode de prévention du développement de maladies parodontales telles que les gingivites ou les parodontites, ladite méthode comprenant l'utilisation de l'outil **1** selon l'invention.
Selon un mode de réalisation de l'invention, l'outil **1** de la présente invention est utile pour maintenir la bonne santé des gencives chez un sujet, par exemple en évitant le développement de maladies parodontales telles que les gingivites ou les parodontites.
Selon un mode de réalisation de l'invention, l'outil **1** selon l'invention est utile pour prévenir le développement de maladies parodontales telles que les gingivites ou les parodontites.

La présente invention concerne également une méthode pour aider les personnes fumant du tabac à arrêter de fumer. L'outil **1** selon l'invention, en occupant la cavité buccale du sujet, permettrait en effet de jouer un rôle de dérivatif, et d'atténuer le besoin physique des fumeurs à porter une cigarette à leurs lèvres.
Selon un mode de réalisation de l'invention, le sujet auquel une des méthodes selon l'invention est appliquée, ou qui utilise l'outil **1** selon l'invention est fumeur. Selon un mode de réalisation de l'invention, ledit sujet est fumeur, et rencontre des difficultés à s'arrêter de fumer, du fait par exemple d'une dépendance comportementale au mouvement de porter une cigarette à ses lèvres.

Selon un mode de réalisation de l'invention, l'outil **1** selon l'invention n'est pas utilisé dans le cadre d'un traitement médical, tel que par exemple un traitement parodontique ou dentaire.
Selon un mode de réalisation de l'invention, l'outil **1** selon l'invention est utilisé dans le cadre de l'hygiène bucco-dentaire quotidienne d'un sujet.
Selon un mode de réalisation de l'invention, l'outil **1** est utilisé au minimum une fois par semaine, préférentiellement une fois tous les deux jours, encore plus préférentiellement une ou plusieurs fois par jour.
Selon un mode de réalisation de l'invention, à chaque utilisation, l'outil **1** est utilisé pendant environ 1 à 30 minutes, préférentiellement pendant 3 à 15 minutes.

Selon un mode de réalisation de l'invention, le sujet auquel une des méthodes selon l'invention est appliquée, ou qui utilise l'outil **1** selon l'invention, est un humain.
La quantité de tartre présente sur les dents augmente généralement avec l'âge. Selon un mode de réalisation de l'invention, le sujet auquel une des méthodes selon l'invention est appliquée, ou qui utilise l'outil **1** selon l'invention, est âgé d'au moins 20 ans, préférentiellement d'au moins 30 ans, plus préférentiellement d'au moins 40 ans, encore plus préférentiellement d'au moins 50 ans, encore plus préférentiellement d'au moins 60 ans.
Selon un mode de réalisation de l'invention, le sujet auquel une des méthodes selon l'invention est appliquée, ou qui utilise l'outil **1** selon l'invention développe des quantités importantes de tartre, ou est à risque de développer des quantités importantes de tartre, par exemple du fait d'un dérèglement du pH salivaire.

## Revendications

1. Outil (1) de nettoyage des dents destiné à être placé dans la bouche d'un sujet, **caractérisé en ce qu**'il comprend : un support exobuccal (2) comprenant une partie (5) ; un crochet (3) endobuccal comprenant une pointe (4) à l'une de ses extrémités, **caractérisé en ce que** :
- la partie (5) du support (2) présente une surface destinée à être au contact des lèvres (18), empêchant ainsi la pénétration de ladite partie (5) dans la bouche ;
- l'extrémité du crochet (3) opposée à la pointe (4) est fixée à la partie (5) du support (2).

2. Outil (1) selon la revendication 1, **caractérisé en ce que** la surface de ladite partie (5) du support (2) destinée à être au contact des lèvres (18) est supérieure à 2 cm², préférablement supérieure à 4 cm², encore plus préférablement supérieure à 6 cm²_{.}

3. Outil (1) selon la revendication 1 ou la revendication 2, **caractérisé en ce que** ledit support (2) comprend une partie (6) opposée au crochet (3) permettant la préhension de l'outil (1) par ledit sujet.

4. Outil (1) selon l'une quelconque des revendications 1 à 3, **caractérisé en ce que** le support (2) comprend un trou taraudé (10) permettant de visser le crochet (3) sur la partie (5) du support (2).

5. Outil (1) selon l'une quelconque des revendications 1 à 4, **caractérisé en ce que** ledit crochet (3) comprend :
- une partie rectiligne (7) comprenant un filetage (13) permettant de visser le crochet (3) au support (2) ;
- une ou plusieurs angulations formant une courbure (8) ;
- une partie rectiligne (9) en retour de la courbure (8), de préférence ladite partie rectiligne (9) est parallèle à la partie rectiligne (7).

6. Outil (1) selon l'une quelconque des revendications 1 à 5, **caractérisé en ce qu**'il comprend en outre un capuchon.

7. Méthode non thérapeutique de nettoyage des dents ou de maintien de la santé gingivale chez un sujet, ladite méthode comprenant l'utilisation de l'outil (1) selon l'une quelconque des revendications 1 à 6.

8. Méthode d'aide à l'arrêt du tabac chez un sujet comprenant l'utilisation de l'outil (1) selon l'une quelconque des revendications 1 à 6.
